# EUROPÄISCHE PATENTANMELDUNG

(11) **EP 1 168 167 A2**
(43) Veröffentlichungstag der Anmeldung: **02.01.2002**
(21) Anmeldenummer: 01111611.8
(22) Anmeldetag: 12.05.2001
(51) Int. Cl.: G06F 9/46

(54) **Ressourcen-Management-Verfahren für ein verteiltes System von Teilnehmern**

(30) Priorität: 30.05.2000 DE 10026730
(71) Anmelder: Bayerische Motoren Werke Aktiengesellschaft, 80809 München (DE)
(72) Erfinder: Thiel, Christian, Dr., 83098 Brannenburg (DE)

(57) **Zusammenfassung**

Bei einem Ressourcen-Management-Verfahren für ein verteiltes System von Teilnehmern (i.f. "Ressourcen" genannt), die durch mehrere Controller gesteuert werden und die miteinander kommunizieren, besitzen die Controller verschiedene und teilweise untereinander gleiche Priorität. Jede Ressource wird von einem Controller solange gesteuert, solange dieser und solange kein Controller mit höherer Priorität auf sie zugreift. Von den Controllern, die die Ressource benötigen, steuert der mit der höchsten Priorität die Ressource und von mehreren Controller mit der gleichen höchsten Priorität steuert derjenige die Ressource, der als erster auf sie zugreift.

## Beschreibung

Die Erfindung bezieht sich auf ein Ressourcen-Management-Verfahren für ein verteiltes System von Teilnehmern (i.f. "Ressourcen" genannt), die als Hardwarekomponenten oder aber auch als Softwaremodule ausgebildet sind, die durch mehrere Controller gesteuert werden und die über ein Bussystem oder über eine geräteinterne Softwareschnittstelle miteinander kommunizieren.

Applikationen sind Einheiten in Hard- und Software, die dem Kunden oder dem System eine Funktionalität zur Verfügung stellen. Dabei gibt es grundlegende Applikationen, sog. Ressourcen, die funktionale Bausteine für ein System darstellen (ein CD-Laufwerk, ein Tuner, ein Telefon, ein Mikrofon, ein Amplifier etc.). Diese Ressourcen werden von hierarchisch höhergestellten Applikationen, sog. Controllern, z.B. einem zentralen Mensch-Maschine-Interface (MMI) verwendet (gesteuert), um dem Nutzer eine insgesamt höherwertige Funktionalität zur Verfügung zu stellen (z.B. Funktionalität Telefon Freisprechen durch Verwendung der Ressourcen Mikrofon, Telefon und Amplifier mit Lautsprechern). Die Controller verknüpfen die Ressourcen zu einem System im Dienste des oder der Nutzer.

In einem größeren System, wie dem Infotainmentsystem in einem Fahrzeug gibt es oftmals mehrere Controller, die auf die gleichen Ressourcen zugreifen. Ein Beispiel sind mehrere MMIs für Front- und Fondpassagiere. Von jeder MMI aus kann der Nutzer den CD-Wechsler bedienen. Grundsätzlich ist zu unterscheiden zwischen exklusiven Ressourcen, die jeweils nur von einem Controller benutzt werden können, wie z.B. einem Telefon, und shared Ressources, die andere Controller mitbenutzen können, wie z.B. die Audio-CD im CD-Wechsler, die durch mehrere Nutzer angehört werden kann (z.B. über Lautsprecher und über Kopfhörer).
Bei der Benutzung von Ressourcen durch mehrere Controller kann es zu Zugriffskonflikten kommen, z.B. wenn von mehreren MMIs gleichzeitig auf die gleiche Ressource zugegriffen wird (z.B. der eine Nutzer will Track 5 der CD hören und der andere Track 9). Aber auch für den menschlichen Nutzer nicht direkt sichtbare Controller können auf die Ressource zugreifen wollen. So könnte beispielsweise ein Navigationssystem auf eine Karten-CD-ROM zugreifen wollen, die sich im selben CD-Wechsler befindet wie die gerade gehörte Audio-CD. Es gibt Multimedia-Wechsler, die Audio-, Video- oder ROM-Disks abspielen können.

Heutige Infotainmentsysteme in Fahrzeugen sind meist historisch gewachsen. Ein gezieltes Ressourcenmanagement findet nicht statt. Jeder Controller versucht, durch Beobachtung des Systemzustandes herauszufinden, ob er gerade auf eine Ressource zugreifen kann. Da die Systeme immer komplexer werden, wird auch diese Aufgabe immer schwieriger. Der Entwicklungsaufwand, um alle Eventualitäten abzudecken, ist sehr hoch - die Qualität des Ergebnisses ist entsprechend niedrig.

In zentralen Systemen, die sich in einer Hardwareeinheit befinden, wie z.B. in einem PC ist die Verwaltung von Ressourcen durch Mechanismen im Betriebssystem gut geregelt. Oftmals ist eine spezielle Applikation realisiert, der sog. Ressourcenmanager, bei dem Controller den Zugriff auf eine Applikation beantragen und der je nach Priorität der Controller die Ressource einem Controller zuteilt. Eine weitere in zentralen Systemen verwendete Methode sind sog. Semaphoren (Ampeln), die anzeigen, ob eine Ressource gerade benutzt wird oder nicht. Sie stellt einen dezentralen Mechanismus dar, da jeder Controller selbst beurteilt, ob er auf die Ressource zugreifen kann oder nicht.

Meist werden diese Methoden auch für verteilte Systeme verwendet. Ein Betriebssystem kann hier jedoch nicht verwendet werden. In einem verteilten System werden mehrere verschiedene Betriebssysteme eingesetzt, daher müssen allgemeine Mechanismen definiert werden und kann nicht auf die Mechanismen eines einzelnen Betriebssystems zurückgegriffen werden (die Mechanismen werden über mehrere Hardware-Einheiten hinweg verwendet und nicht nur in einer Einheit). Daher bleiben Ressourcenmanager und Semaphoren.

Für ein zumindest zum Teil verteiltes System wie dem Infotainmentsystem des Fahrzeugs, bei dem sich Ressourcen und die verschiedenen Controller in mehreren Hardwareeinheiten befinden können und zumindest zum Teil über ein Bussystem, ansonsten über eine Software-Schnittstelle kommunizieren, ist ein zentraler Ressourcenmanager nicht optimal. Er muß den Zustand des verteilten Systems sehr genau beobachten, um beurteilen zu können, welcher Controller in welcher Situation gerade Priorität hat. Dazu ist sehr viel Kommunikation zwischen dem System und dem Ressourcenmanager notwendig. Zudem muß er sehr genau auf das spezielle System ausgelegt werden. Ergeben sich durch Ausstattungsvarianten, Weiterentwicklungen oder andere Fahrzeugmodelle Änderungen im System und in der Prioritätsverteilung, muß der Ressourcenmanager jeweils darauf angepaßt werden. Zudem bildet der Ressourcenmanager neben den Controllern, eine weitere Einheit, die das System steuert. Alle solchen Einheiten müssen mit entsprechendem Aufwand aufeinander abgestimmt werden. Aus diesen Gründen ist der zentrale Mechanismus einer Ressourcenmanagers in verteilten Systemen ungünstig.

Der dezentrale Mechanismus unter Verwendung von Semaphoren ist jedoch auch nicht ausreichend. Eine Semaphore (Ampel) besagt lediglich, ob eine Ressource belegt ist oder nicht. Sie sagt nichts darüber aus, wer die Ressource gerade belegt und gestattet kein Ressource Sharing.

Der Erfindung liegt die Aufgabe zugrunde, ein dezentrales Verfahren der eingangs genannten Art zu schaffen, das mit geringem Aufwand in verteilten Systemen einen Zugriff auf die vorhandenen Ressourcen regelt und damit Zugriffs-Konfliktauflösung und Ressourcen Sharing ermöglicht.

Die Erfindung löst diese Aufgabe dadurch, daß die Controller verschiedene und teilweise untereinander gleiche Priorität besitzen, daß jede Ressource von einem Controller solange gesteuert wird, solange dieser und solange kein Controller mit höherer Priorität auf sie zugreift, daß von den Controllern, die die Ressource benötigen, der mit der höchsten Priorität die Ressource steuert, und daß von mehreren Controllern mit der gleichen höchsten Priorität derjenige die Ressource steuert, der als erster auf sie zugreift.

Vorteilhafte Ausgestaltungen der Erfindung sind in den Patentansprüchen 2 bis 5 beschrieben.

Die Erfindung besteht in einer Eigenschaft, die jede Ressource zur Verfügung stellt. Eine Eigenschaft ist ein Begriff aus der objektorientierten Programmierung (engl. Property) und stellt im wesentlichen einen Speicherplatz dar, der einen bestimmten Wert (oder eine Eigenschaft) annehmen kann. Hier ist auf dem Speicherplatz eine Liste gespeichert, in die sich mehrere Controller mit ihrer jeweiligen Priorität eintragen können. Die Ressource kennzeichnet in der Liste den Controller, dem die Ressource "gehört". Er ist der "Owner" der Ressource. Vorteilhafterweise erfolgt die Kennzeichnung durch die Ressource dadurch, daß die Liste nach Prioritäten geordnet wird. Der Controller mit der höchsten Priorität steht am Anfang der Liste. Er ist der Owner der Ressource. Alle anderen eingetragenen Controller können die Ressource mitbenutzen. Dabei muß ein Controller aus der Art der Ressource schließen, wie weit er mit der Mitbenutzung gehen kann. Einträge von Controllern gleicher Priorität werden nach dem Zeitpunkt der Eintragung absteigend geordnet.

Im folgenden Beispiel ist die Liste einer Ressource 1 zu drei aufeinanderfolgenden Zeiten dargestellt. Zunächst ist nur der Controller 4 eingetragen und damit der Owner der Ressource. Zum Zeitpunkt 2 hat ihn Controller 3 mit höherer Priorität zum Mitbenutzer gemacht. Controller 3 ist nun der Owner. Er kann von diesem Platz durch den zum Zeitpunkt 3 dazugekommenen Controller 7 mit gleicher Priorität nicht vertrieben werden.

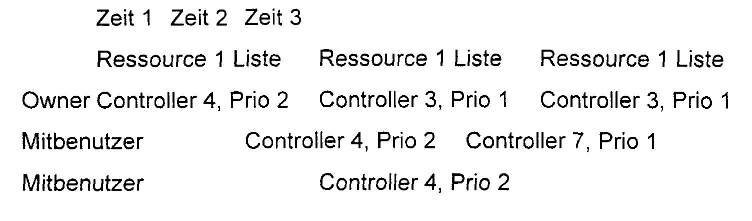

Benötigt ein eingetragener Controller die Ressource nicht mehr, trägt er sich aus. Ist noch ein Mitbenutzer eingetragen, erkennt der sich verabschiedende Owner, daß er die Ressource nicht verändern darf (z.B. Anhalten des CD-Players). Auf die Eigenschaft bzw. die Liste kann von extern, d.h. über den Bus oder die Software-Schnittstelle zugegriffen werden, d.h. eine Funktionseinheit Controller kann den Speicher in der gesteuerten Funktionseinheit beschreiben und sich dort ein- bzw. austragen. Vorteilhafterweise schreibt der Controller nicht direkt auf bestimmte Speicherzellen der Ressource, sondern indirekt, indem er in der gesteuerten Funktionseinheit eine Routine aufruft, die das dann tut.

Die Verwaltung der Liste und Kennzeichnung des Owners, z.B. durch Sortierung der Liste wird von der Ressource selbst übernommen. Die Ressource läßt die Speicherstelle von den auf sie zugreifenden Controllern füllen oder leeren (Eintrag bzw. Austrag), sie sortiert die Liste lediglich. Sonst hat die Liste jedoch keinen Einfluß auf die Funktionalität der Ressource, d.h. die Ressource wird nicht für die Steuerung durch den Owner reserviert. Bei jeder Veränderung in der Liste wird allen Controllern der neue Zustand der Liste mitgeteilt.

Durch die Erfindung ergibt sich ein einfacher aber sehr leistungsfähiger und flexibler Mechanismus zum Ressourcenmanagement. Sie stellt einen dezentralen Mechanismus dar, der eine komplexe zentrale Verwaltungseinheit, wie einen Ressourcenmanager erübrigt.

Im Gegensatz zu einem Semaphorenmechanismus, bei dem ein Controller nur sieht, ob eine Ressource gerade gesperrt ist, ist bei einem erfindungsgemäßen Verfahren jeder Controller jederzeit im Bilde, wer gerade Owner der Ressource ist. So kann beispielsweise in einem Fahrzeug dem Fahrer angezeigt werden, daß er seinen im Fond sitzenden Chef stört, wenn er den CD-Player bedient, da dieser gerade CD über Kopfhörer hört. Er kann jedoch die Ressource mitbenutzen (Ressource Sharing), solange er sie nicht steuert (z.B. den Track wechselt). Schaltet der Chef auf Radio um, merkt der Fahrer dies über seine MMI und kann nun frei bedienen, da ihm die Ressource nunmehr gehört.

Auch Ressource Sharing im Zeitmultiplex ist möglich. So kann ein hochpriores Navigationssystem bei Bedarf auf die Karten-CD-ROM zugreifen und ein niederpriorer Reiseführer zwischenzeitlich auf eine andere CD-ROM im selben CD-Wechsler. Immer bei Bedarf verdrängt das Navigationssystem den Reiseführer mit ihrer höheren Priorität. In der Liste hat jeder Controller auch seine Priorität mit eingetragen. Sie stellt neben der Zeit des Eintrags das Kriterium für die Ressource zur Kennzeichnung des Owners, d.h. z.B. zum Sortieren der Liste dar. Der Controller, der nach dem Sortieren am Anfang der Liste steht, ist der Owner der Ressource und kann auf den CD-Wechsler zugreifen. Die Reiseführer-Applikation kann ihrem Nutzer klarmachen, daß er ein wenig warten muß (z.B. durch Anzeige einer Sanduhr).
Der erfindungsgemäße Mechanismus erfordert keine aufwendige Kommunikation. Die Controller müssen keine komplizierten Annahmen über Systemzustände machen, um zu entscheiden ob sie eine Ressource steuern können. Die Ownership ist nicht komplex im System verteilt und wird an mehreren Stellen (von mehreren Controllern) abgeleitet mit der Gefahr von Fehlinterpretationen. Sie ist nur an einer Stelle verankert - bei der Ressource selbst. Durch den einfachen Sortiermechanismus in der Liste der Ressource (siehe oben) ist jeweils klar, wer Owner ist. Jeder andere eingetragene Controller darf die Ressource sharen. Die Controller müssen sich auch nicht untereinander abstimmen. Der Speicher in jeder Ressource ist flüchtig und nur während einer Betriebsphase wirksam. Bei einer neuen Betriebsphase erfolgt automatisch ein Reset.

Es erfolgt keine Priorisierung und Konfliktlösung auf unterer Hierarchieebene, d.h. in den Ressources selbst. Dies würde umfangreiches und änderungsanfälliges Systemwissen erfordern. So müßte ein CD-Wechsler alle seine Anwendungen im System, sowie den momentanen Systemzustand kennen, um entscheiden zu können, wem Priorität einzuräumen ist. Es wird lediglich ein Medium realisiert, das eine Entdeckung eines Konfliktes ermöglicht. Dieses Medium ist die erfindungsgemäße Eigenschaft.

Damit ergibt sich ein sicheres und aufgrund seiner einfachen Struktur fehlerfreies dezentrales Verfahren zum Ressourcen-Management verteilter Applikationen.

## Patentansprüche

1. Ressourcen-Management-Verfahren für ein verteiltes System von Teilnehmern (i.f. "Ressourcen" genannt), die durch mehrere Controller gesteuert werden und die miteinander kommunizieren, **dadurch gekennzeichnet, daß** die Controller verschiedene und teilweise untereinander gleiche Priorität besitzen, daß jede Ressource von einem Controller solange gesteuert wird, solange dieser und solange kein Controller mit höherer Priorität auf sie zugreift, daß von den Controllern, die die Ressource benötigen, der mit der höchsten Priorität die Ressource steuert, und daß von mehreren Controller mit der gleichen höchsten Priorität derjenige die Ressource steuert, der als erster auf sie zugreift.

2. Verfahren nach Anspruch 1, **dadurch gekennzeichnet, daß** jede Ressource selbst die Controller auflistet, die aktuell auf sie zugreifen.

3. Verfahren nach Anspruch 1, **dadurch gekennzeichnet, daß** jeder Controller, der aktuell auf die Ressource zugreift sich in eine Liste der Ressource einträgt.

4. Verfahren nach einem der Ansprüche 1 bis 3, **dadurch gekennzeichnet, daß** jede Ressource die Liste der auf sie zugreifenden Controller auf Anforderung ausgibt.

5. Verfahren nach einem der Ansprüche 1 bis 4, **dadurch gekennzeichnet, daß** die Ressource auch den Controller kennzeichnet , der sie steuert.
